# EUROPÄISCHE PATENTANMELDUNG

(11) **EP 0 685 440 A1**
(43) Veröffentlichungstag der Anmeldung: **06.12.1995**
(21) Anmeldenummer: 95107201.6
(22) Anmeldetag: 12.05.1995
(51) Int. Cl.: C04B 41/89

(54) **Schichtverbund mit Aminosilan-Haftmittelschicht und zweite Haftmittelschicht, die Fluorpolymeres mit Epoxidharz enthält**

(30) Priorität: 31.05.1994 DE 4418893
(71) Anmelder: METALLGESELLSCHAFT AKTIENGESELLSCHAFT, D-60323 Frankfurt am Main (DE)
(72) Erfinder: Mai, Sven, D-63571 Gelnhausen (DE); Henss, Peter, D-60437 Frankfurt am Main (DE)

(57) **Zusammenfassung**

Bei einem Schichtverbund aus einem anorganischen Substrat, einer Haftmittelschicht aus Organosilan und einer Deckschicht aus organischem Polymerem ist zur Verbesserung der Haftfestigkeit zwischen der Organosilanschicht und der Deckschicht eine Haftmittelschicht aus Metalloxid und Epoxidharz enthaltendem Fluorpolymerem angeordnet.

## Beschreibung

Die Erfindung betrifft einen Schichtverbund aus einem anorganischem Substrat, vorzugsweise aus einem keramischen Werkstoff, einer Haftmittelschicht aus Organosilan und einer Deckschicht aus organischem Polymerem.

Aus der Firmendruckschrift "Anwendung von organofunktionellen Silanen" der HÜLS AG, Marl (07/1992), ist es bekannt, anorganische Werkstoffe, wie Glas, Mineralien, Metalle, mit organischem Polymerem, wie Duroplasten, Thermoplasten und Elastomeren, durch als Haftmittelschicht dienende Organosilane zu verbinden. Auf diese Weise wird eine Erhöhung der mechanischen und elektrischen Eigenschaften, wie z.B. Zugfestigkeit, Biegefestigkeit, Kerbschlagzähigkeit, Abriebfestigkeit, E-Modul, spezifischer Durchgangswiderstand, dielektrischer Verlustfaktor, induktiver Verlustwiderstand, Dielektrizitätszahl, erreicht. Die Wirkung der Organosilane ist durch eine organofunktionelle und eine siliziumfunktionelle Gruppe begründet. Die siliziumfunktionelle Gruppe kann nach ihrer Hydrolyse mit aktiven Stellen eines anorganischen Substrats oder durch Kondensation mit anderen Siliziumverbindungen reagieren und so stabile Bindungen aufbauen. Die Haftung zum organischen Polymeren erfolgt über die organofunktionelle Gruppe, die im allgemeinen über eine Kohlenstoffkette fest an das Silizium gebunden ist. Die Organosilane sind in geringer Konzentration von 0,5 bis 5 % in Wasser oder einem Gemisch aus Wasser und organischem Lösungsmittel oder in organischem Lösungsmittel gelöst und werden durch Sprühen, Tauchen, Suspendieren, Streichen usw. auf das anorganische Substrat aufgetragen. Eine Trocknung erfolgt bei einer Temperatur von 80 bis 180°C. Die Organosilane führen zur Ausbildung einer Brücke zwischen dem anorganischen und dem organischen Material, die sonst durch das Wasser in der Phasengrenzschicht an einem festen Haftverbund gehindert sind.

In der EP-A-0 231 001 ist ein Verfahren zum Aufbringen von Fluorkohlenwasserstoffharzen auf Edelstahl unter Verwendung von Aminosilan-Haftvermittler beschrieben.

Es ist die Aufgabe der vorliegenden Erfindung, die Festigkeit des Haftverbundes zwischen einem mit einer Organosilanschicht beschichteten anorganischen Substrat und einer Deckschicht aus organischem Polymerem so zu verbessern, daß insbesondere bei erheblicher Feuchtebelastung ein Eindringen von Feuchtigkeit unter die Deckschicht und ein Abheben der Deckschicht verhindert werden.

Die Lösung dieser Aufgabe erfolgt durch die im Patentanspruch 1 aufgeführten Merkmale.

In den Patentansprüchen 2 bis 6 sind vorzugsweise Ausgestaltungen des Schichtverbunds gemäß Patentanspruch 1 wiedergegeben.

Das im Patentanspruch 6 angeführte Titansuboxid wird insbesondere für die Herstellung von leitfähigen Trägern, z.B. für aktives Material in Blei-Säure-Speicherbatterien, oder als elektrisch-isolierend wirkendes Material verwendet (EP-B-0 360 924, EP-A-0 438 839).

Der erfindungsgemäß aufgebaute Schichtverbund wird in der Weise hergestellt, daß auf die Oberfläche des anorganischen Substrats eine wäßrige und/oder organische Lösung eines Organosilans aufgetragen, nach der Reaktion des Organosilans mit dem anorganischen Substrat eine Schicht aus Metalloxid und Epoxidharz enthaltendem Fluorpolymer-Primer elektrostatisch aufgebracht, dieser bei einer Temperatur von 250 bis 300°C eingebrannt und danach die aus Trifluorchlorethylen/Ethylen-Copolymer (E/CTFE) bestehende Deckschicht elektrostatisch aufgetragen wird.

Die Erfindung ist nachstehend anhand eines Ausführungsbeispiels näher erläutert.

Zur Herstellung eines elektrisch leitfähigen, keramischen, mit Platin zu beschichtenden Trägers für den Einsatz in Elektrolyseanlagen werden mehrere plattenförmige Bauelemente aus Titansuboxid der Formel TiO_{1,75} in einem aus E/CTFE bestehenden Rahmen angeordnet. Auf die Mantelfläche der einzelnen plattenförmigen Bauelemente und auf die an die Mantelfläche angrenzenden Ränder der Grund- und Deckfläche wird eine wäßrige Organosilan-Lösung des Typs H₂N-(CH₂)₃-Si(OC₂H₅)₃ in einer Schichtdicke von wenigen µm aufgetragen und anschließend mehrere Stunden bei Raumtemperatur getrocknet. Nachdem die siliziumfunktionelle Gruppe des Organosilans mit dem Titansuboxid reagiert hat, wird auf die Organosilanschicht eine Haftmittelschicht aus einem unter dem Handelsnamen Halar^{(R)} bekannten Fluorpolymer-Primer in einer Dicke von 0,25 mm auf elektrostatische Weise aufgesprüht und bei einer Temperatur von ca. 280°C eingebrannt. Je nach gewünschter Schichtdicke der Deckschicht wird auf diese Zwischenschicht E/CTFE in einem oder mehreren Durchgängen durch elektrostatisches Spritzen aufgetragen. In einem Durchgang kann eine Schichtdicke von 0,125 mm erzielt werden. Die so vorbehandelten Titansuboxidbauelemente werden in den aus E/CTFE bestehenden Rahmen eingesetzt und sowohl mit dem Rahmen als auch untereinander durch ein geeignetes Kunststoffschweißverfahren fest miteinander verbunden. Die E/CTFE-Deckschicht ist so fest mit den aus Titansuboxid bestehenden Bauelementen verbunden, daß kein Eindringen von Feuchtigkeit unter die Deckschicht, auch nach sehr langem Einsatz, beispielsweise in Elektrolyseanlagen, beobachtet werden konnte.

## Patentansprüche

1. Schichtverbund aus einem anorganischen Substrat, vorzugsweise aus einem keramischen Werkstoff, einer Haftmittelschicht aus Organosilan und einer Deckschicht aus organischem Polymerem, dadurch gekennzeichnet, daß zwischen der auf dem anorganischen Substrat haftenden Organosilanschicht und der Deckschicht aus organischem Polymerem eine Haftmittelschicht aus Metalloxid und Epoxidharz enthaltendem Fluorpolymerem angeordnet ist.

2. Schichtverbund nach Anspruch 1, dadurch gekennzeichnet, daß das organische Polymere der Deckschicht Trifluorchlorethylen/Ethylen-Copolymer (E/CTFE) ist.

3. Schichtverbund nach einem der Ansprüche 1 und 2, dadurch gekennzeichnet, daß zwischen der Organosilanschicht und der Deckschicht eine unter dem Handelsnamen Halar^{(R)}-Fluorpolymer-Primer bekannte Haftmittelschicht angeordnet ist.

4. Schichtverbund nach einem der Ansprüche 1 bis 3, gekennzeichnet durch ein Organosilan mit der Strukturformel H₂N-(CH₂)₃-Si(OC₂H₅)₃.

5. Schichtverbund nach einem der Ansprüche 1 bis 3, gekennzeichnet durch ein Organosilan mit der Strukturformel H₂N-(CH₂)₂-NH-(CH₂)₃-Si(OCH₃)₃.

6. Schichtverbund nach einem der Ansprüche 1 bis 5, dadurch gekennzeichnet, daß das anorganische Substrat ein Titansuboxid der Formel TiOₓ ist, wobei x den Bereich von 1,67 bis 1,98 umfaßt.

7. Verfahren zur Herstellung des Schichtverbunds nach einem der Ansprüche 1 bis 6, dadurch gekennzeichnet, daß das anorganische Substrat mit einer 0,5 bis 5 %igen wäßrigen und/oder organischen Lösung eines Organosilans beschichtet, nach erfolgter Reaktion mit dem anorganischen Substrat Metalloxid und Epoxidharz enthaltendes Fluorpolymeres elektrostatisch aufgespritzt, bei Temperaturen von 250 bis 300°C eingebrannt und danach die Deckschicht aus E/CFTE auf elektrostatische Weise aufgebracht wird.
